# EUROPEAN PATENT SPECIFICATION

(11) **EP 2 229 336 B1**
(45) Date of publication and mention of the grant of the patent: **16.05.2012**
(21) Application number: 08720177.8
(22) Date of filing: 03.01.2008
(51) Int. Cl.: B66F 7/08, B60P 3/08, B60P 1/48

(54) **LIFTING MECHANISM AND TRANSPORT VEHICLE EQUIPPED WITH SUCH MECHANISM**
HUBMECHANISMUS UND MIT SOLCH EINEM MECHANISMUS AUSGESTATTETES TRANSPORTFAHRZEUG
MÉCANISME DE LEVAGE ET VÉHICULE DE TRANSPORT ÉQUIPÉ D'UN TEL MÉCANISME

(43) Date of publication of application: 22.09.2010
(73) Proprietor: ROLFO S.p.A., 12042 Bra (Cuneo) (IT); Politecnico di Torino, 10129 Torino (IT)
(72) Inventor: ARNULFO, Elio, I-12042 Bra (CN) (IT); ROLFO, Roberto, I-12042 Bra (CN) (IT); BELFORTE, Guido, I-10129 Torino (IT); COLOMBO, Federico, I-10129 Torino (IT); RAPARELLI, Terenziano, I-10129 Torino (IT); VIKTOROV, Vladimir, I-10129 Torino (IT)
(74) Representative: Garavelli, Paolo
(86) International application number: PCT/IT2008/000007
(87) International publication number: WO 2009/084063

(56) References cited:
- EP-A- 0 517 634
- DE-A1-102005 054 325
- DE-U1- 29 615 981
- US-A- 4 061 390

## Description

The present invention refers to an articulated mechanism for lifting loads, aimed in particular to lift an upper load place of road vehicles. The present invention further refers to a transport vehicle equipped with such lifting mechanism.

Numerous types of lifting mechanisms are known in the art, in particular used for lifting load planes of road vehicles, such as for example the so-called "bisarche", aimed to transport cars arranged on many load planes. Examples of such mechanisms are disclosed in prior patents EP 0517634 A, DE-A-102005054325, FR-A-2665430, US-A-4061390, GB-A-1386766 and US-A-6095748.

EP 0 517 634 A discloses a lifting mechanism comprising at least one external body having a first end thereof articulatedly connected and rotating around at least one external structure and at least one internal body having a first end thereof connected to a load to be handled and/or lifted, said external body being constrained to said internal body through a coupling of a sliding type with respect to said internal body, at least one movement actuator operatively and articulatedly cooperating with said external body, and at least one crank-type kinematism having a first end thereof articulatedly connected to said external body and a second end thereof articulatedly connected to said external structure.

Object of the present invention is solving the above prior art problems, by providing an articulated mechanism for lifting loads, aimed in particular to lift an upper load plane of road vehicles, equipped with a particularly compact structure with a lower encumbrance with respect to what has been proposed by the known prior art.

Another object of the present invention is providing
an articulated mechanism for lifting loads, aimed in particular to lift an upper load plane of road vehicles, that allows a quite high ratio between lifting stroke and overall sizes.

Moreover, an object of the present invention is providing an articulated mechanism for lifting loads, in particular aimed to lift an upper load plane of road vehicles, in which the necessary force value for lifting remains practically constant along the whole stroke that the mechanism itself is able to develop.

A further object of the present invention is providing a transport vehicle equipped with at least one lifting mechanism that allows obtaining a plurality of configurations and therefore of loads, simultaneously reducing at a minimum both encumbrances due to the lifting mechanism and the thrust variations that the actuators must provide when moving.

The above and other objects and advantages of the invention, as will appear from the following description, are obtained by an articulated mechanism for lifting loads, in particular aimed for lifting an upper load plane of road vehicles, as claimed in claim 1.

Moreover, the above and other objects and advantages of the invention are obtained by a transport vehicle as claimed in claim 12.

Preferred embodiments and non-trivial variations of the present invention are the subject matter of the dependent claims.

The present invention will be better described by some preferred embodiments thereof, provided as a nonlimiting example, with reference to the enclosed drawings, in which:
- FIG. 1 shows a side view of a preferred embodiment of the lifting mechanism according to the present invention in one of the position that it can assume during its movement;
- FIG. 2a shows a perspective view of a component of the lifting mechanism of FIG. 1;
- FIG. 2b shows a perspective view of another component of the lifting mechanism of FIG. 1;
- FIG. 3a shows a side view of the lifting mechanism of FIG. 1 in its maximum lowering position;
- FIG. 3b shows a side view of the lifting mechanism of FIG. 1 in an intermediate position;
- FIG. 3c shows a side view of the lifting mechanism of FIG. 1 in its maximum lifting position;
- FIG. 4 shows a side view of a road transport vehicle according to the present invention equipped with the lifting mechanisms of FIG. 1 to 3c;
- FIG. 5a shows a side view of another embodiment of the lifting mechanism according to the present invention in its maximum lowering position;
- FIG. 5b shows a side view of the lifting mechanism of FIG. 5a in its maximum lifting position;
- FIG. 6a shows a side view of another embodiment of the lifting mechanism according to the present invention in its maximum lowering position;
- FIG. 6b shows a side view of the lifting mechanism of FIG. 6a in its maximum lifting position;
- FIG. 7a shows a side view of another embodiment of the lifting mechanism according to the present invention in its maximum lowering position; and
- FIG. 7b shows a side view of the lifting mechanism of FIG. 7a in its maximum lifting position;.

It will be immediately obvious that numerous variations and modifications (for example related to shape, sizes, arrangements and parts with equivalent functionality) can be made to what is described without departing from the scope of the invention as results from the enclosed claims.

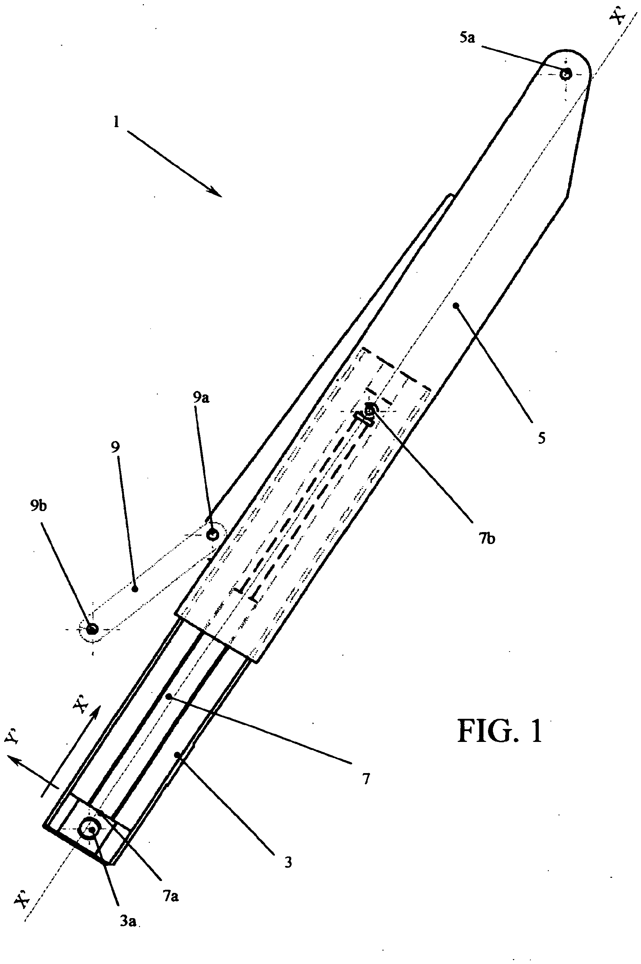

With reference to the Figures, it is possible to note that the lifting mechanism 1 according to the present invention comprises at least one internal body 3 having a first end 3a thereof articulatedly connected and rotating around at least one external structure 11 and at least one external body 5 having a first end 5a thereof connected, preferably in an articulated way, to a load to be handled and/or lifted, such external body 5 being constrained to the internal body 3 through a coupling of the sliding type that allows the external body 5 to perform only translation movements with respect to the internal body 3 along a relative sliding direction shown in FIG. 1 by axis X'-X' (therefore, according to a Cartesian reference plane X'Y' integral with the internal body 3 and oriented as shown in the Figures), at least one movement actuator 7 operatively and articulatedly cooperating with the external body 5, and at least one crank-type kinematism 9 having a first end 9a thereof articulatedly connected to the external body 5 and a second end 9b articulatedly connected to the external structure 11.

In order to enable a more efficient sliding of the external body 5 along the internal body 3, the sliding surfaces of these two parts can be equipped with suitable means (not shown in the Figures) to reduce the wear resistances.

Obviously, the articulated connections, where provided, between the various parts composing the lifting mechanism 1 according to the present invention can be realised by interposing any mechanism or kinematism, such as for example an hinge, suitable for such purpose.

Similarly, the movement actuator 7, though in the Figures it is schematically shown as an example as an hydraulic cylinder, can be any other mechanism or kinematism suitable to provide a linear movement, such as, for example, at least one pneumatic cylinder, screw/lead screw systems actuated by hydraulic, electric, pneumatic motors, etc.

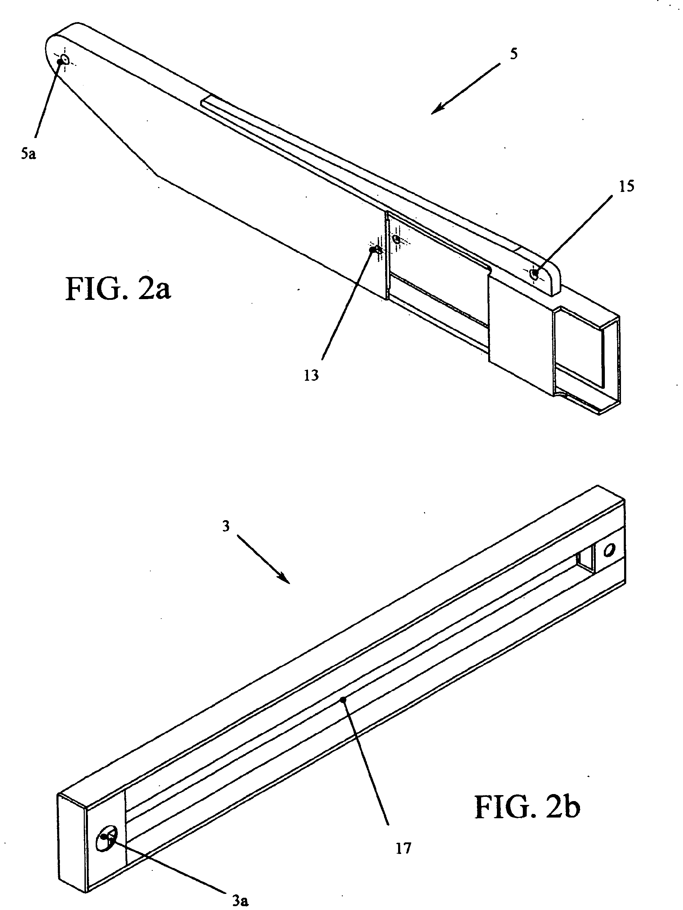

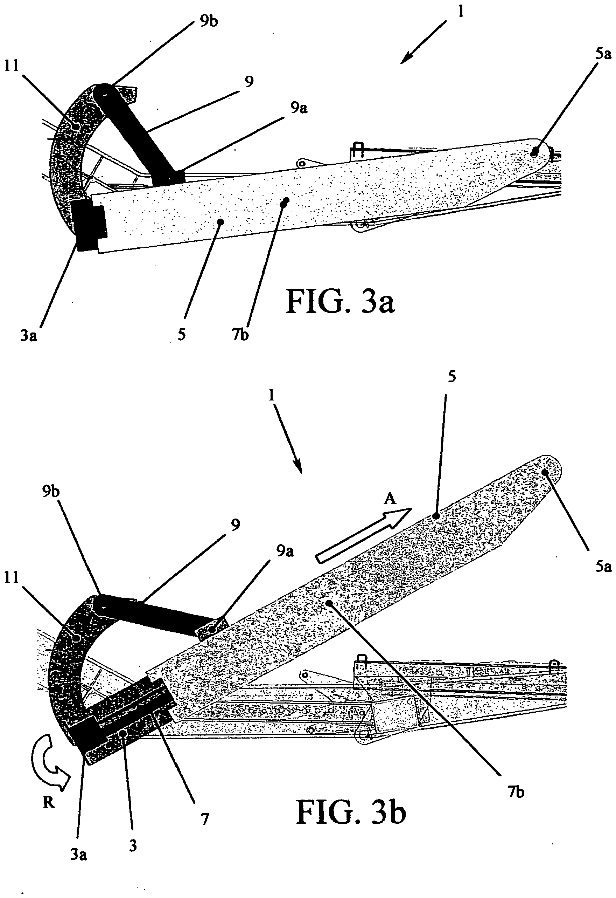

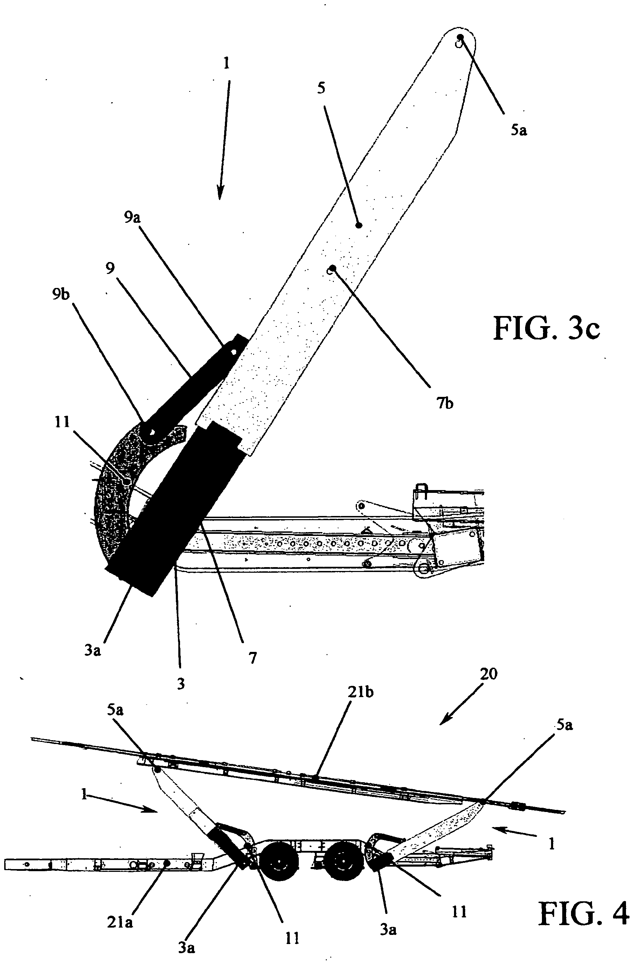

With particular reference now to Figures 1 to 3c, it is possible to note that, in a preferred embodiment of the lifting mechanism 1 according to the present invention, the movement actuator 7 has a first end 7a thereof articulatedly connected to the external structure 11 and a second end 7b thereof articulatedly connected, for example by means of an hinge 13, directly to the external body 5. Obviously, the external body 5 is further equipped with at least one connection point 15 of the first end 9a of the crank-type kinematism 9. In such embodiment, the movement actuator 7 is contained in at least one hollow space 17 obtained between the internal body 3 and the external body 5 and the relative sliding direction X'-X' coincides with and/or is parallel to the linear movement axis of the actuator 7 itself. With particular reference to FIG. 3a, 3b and 3c, it is possible to note that the elongation of the movement actuator 7 takes the lifting mechanism 1 progressively from the position in FIG. 3a to the position in FIG. 3c simultaneously generating the elongation of the lifting mechanism 1 for the coherent sliding of the external body 5 along the internal body 3 (along the direction shown by arrow A in FIG. 3b) and the rotation of the lifting mechanism 1 (along the direction shown by arrow R in FIG. 3b), around the first end 3a articulatedly connected to an external structure 11, taking the first end 5a of the external body 5 to be lifted and, consequently, to lift the possible load connected thereto. Obviously, the shortening of the movement actuator 7 brings about symmetrically contrary movements to the previously described ones, taking the lifting mechanism 1 progressively from the position in FIG. 3c to the position in FIG. 3a.

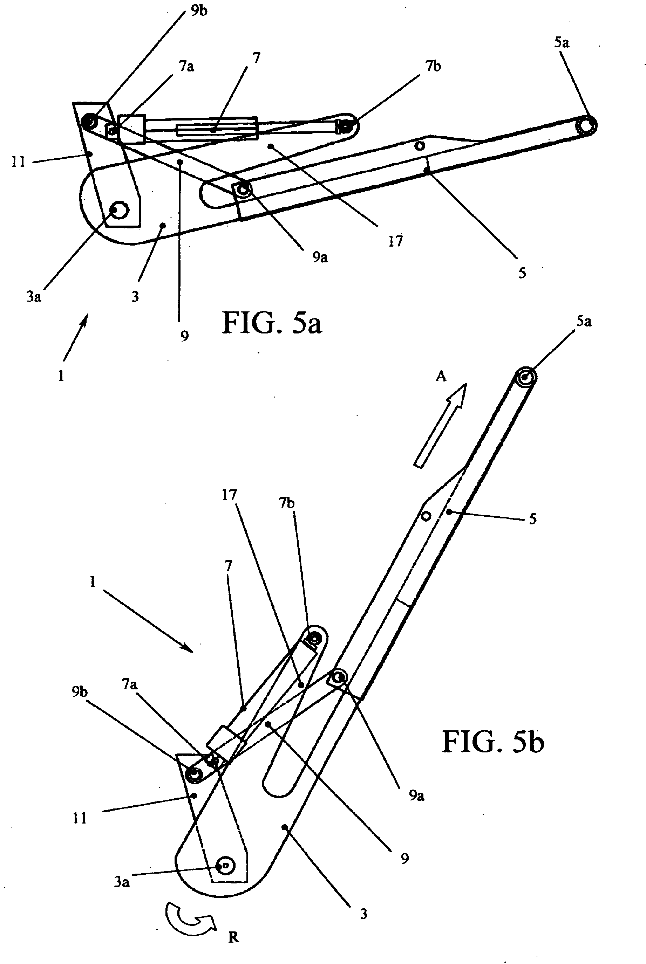

With reference now to FIG. 5a and 5b, it is possible to note that, in another preferred embodiment of the lifting mechanism 1 according to the present invention, the movement actuator 7 operatively and articulatedly cooperates with the external body 5 by interposing a connection lobe 17 integral with the internal body 3. In particular, in such embodiment, the movement actuator 7 has its first end 7a articulatedly connected to the external structure 11 and its second end 7b articulatedly connected to the connection lobe 17. According to such configuration, the shortening of the movement actuator 7 takes the lifting mechanism 1 progressively from the position in FIG. 5a to the position in FIG. 5b simultaneously generating the elongation of the lifting mechanism 1 for the coherent sliding of the external body 5 along the internal body 3 (along the direction shown by arrow A in FIG. 5b) and the rotation of the lifting mechanism 1 (along the direction shown by arrow R in FIG. 5b), around the first end 3a articulatedly connected to the external structure 11, taking the first end 5a of the external body 5 to be lifted and, consequently, to lift the possible load connected thereto. Obviously, the elongation of the movement actuator 7 brings about symmetrically contrary movements to the previously described ones, taking the lifting mechanism 1 progressively from the position in FIG. 5b to the position in FIG. 5a.

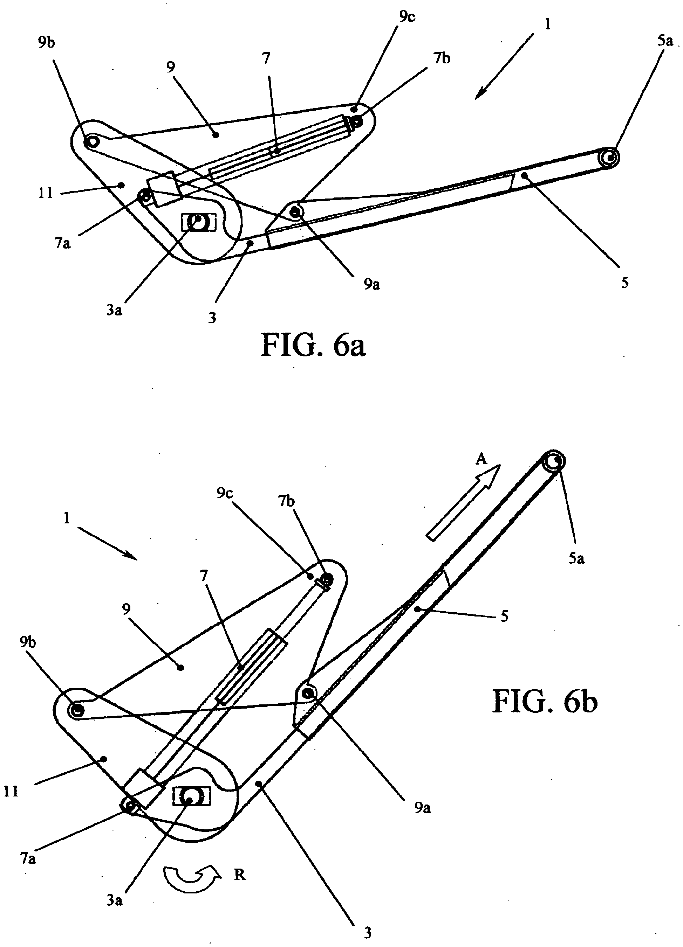

With reference now to FIG. 6a and 6b, it is possible to note that, in another preferred embodiment of the lifting mechanism 1 according to the present invention, the movement actuator 7 operatively and articulatedly cooperates with the external body 5 by interposing del crank-type kinematism 9. In particular, in such embodiment, the movement actuator 7 has its first end 7a articulatedly connected to the internal body 3 and its second end 7b articulatedly connected to a connecting rod lobe 9c of the crank-type kinematism 9. According to such configuration, the elongation of the movement actuator 7 takes the lifting mechanism 1 progressively from the position in FIG. 6a to the position in FIG. 6b simultaneously generating the elongation of the lifting mechanism 1 for the coherent sliding of the external body 5 along the internal body 3 (along the direction shown by arrow A in FIG. 6b) and the rotation of the lifting mechanism 1 (along the direction shown by arrow R in FIG. 6b), around the first end 3a articulatedly connected to the external structure 11, taking the first end 5a of the external body 5 to be lifted and, consequently, to lift the possible load connected therewith. Obviously, the shortening of the movement actuator 7 brings about symmetrically contrary movements to the previously described ones, taking the lifting mechanism 1 progressively from the position in FIG. 6b to the position in FIG. 6a.

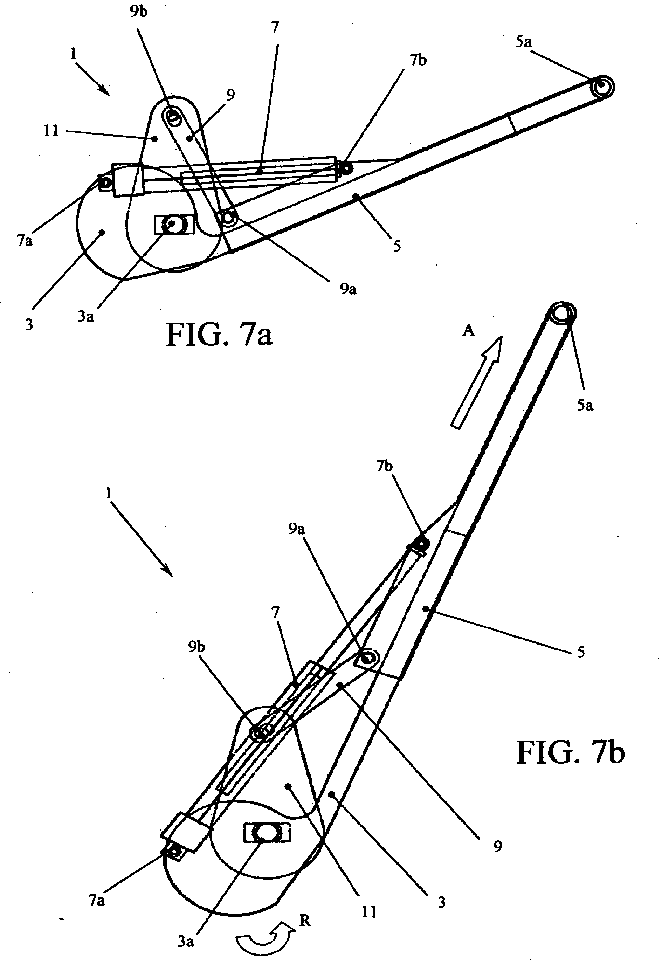

With reference now to FIG. 7a and 7b, it is possible to note that, in another preferred embodiment of the lifting mechanism 1 according to the present invention, the movement actuator 7 operatively and articulatedly cooperates directly with the external body 5. In particular, in such embodiment, the movement actuator 7 has its first end 7a articulatedly connected to the internal body 3 and its second end 7b articulatedly connected to the external body 5. Also in this case, the elongation of the movement actuator 7 takes the lifting mechanism 1 progressively from the position in FIG. 7a to the position in FIG. 7b simultaneously generating the elongation of the lifting mechanism 1 for the coherent sliding of the external body 5 along the internal body 3 (along the direction shown by arrow A in FIG. 7b) and the rotation of the lifting mechanism 1 (along the direction shown by arrow R in FIG. 7b), around the first end 3a articulatedly connected to the external structure 11, taking the first end 5a of the external body 5 to be lifted and, consequently, to lift the possible load connected thereto. Obviously, the shortening of the movement actuator 7 brings about symmetrically contrary movements to the previously described ones, taking the lifting mechanism 1 progressively from the position in FIG. 7b to the position in FIG. 7a.

With reference now to FIG. 4, it is possible to note a possible and preferred application of the lifting mechanism 1 according to the present invention. In fact, a particularly interesting and advantageous use is in the field of transport vehicles 20 of the type equipped with two load planes 21a and 21b, of which the upper plane 21b must be able to be handled in height in order to allow a variety of configurations, and thereby of loads, simultaneously reducing at a minimum both the encumbrances due to the lifting mechanism 1 and the thrust variations that the actuators 7 must provide when moving. Obviously, this category of vehicles comprises those aimed to transport other vehicles, such as, for example, the so-called "bisarche". The present invention therefore also refers to a transport vehicle 20 as previously described, in which one or more lifting mechanisms 1 according to the present invention are interposed between the lower load plane 21a and the upper load plane 21b, since the external structure 11 is preferably and substantially arranged at the height of the lower load plane 21a and the first end 5a of the external body 5 is articulatedly connected to the upper load plane 21b. Obviously, the use of at least two, suitably arranged lifting mechanisms 1 according to the present invention and their independent actuation allows a differential lowering and lifting of the upper load plane 21b, allowing not only to lift and lower this latter one always parallel thereto, but also to slant it. In a preferred embodiment of the transport vehicle 20 according to the present invention, when the lifting mechanisms 1 according to the present invention are arranged on the left and right sides of the vehicle itself, in order to avoid lifting and lowering misalignments of the upper load plane 21b, it is possible to provide that the mechanisms, at least those corresponding on two different sides, are mutually connected by at least one connection structure in order to make the movement synchronous.

## Claims

1. Lifting mechanism (1) comprising at least one internal body (3) having a first end (3a) thereof articulatedly connected and rotating around at least one external structure (11) and at least one external body (5) having a first end (5a) thereof connected to a load to be handled and/or lifted, said external body (5) being constrained to said internal body (3) through a coupling of a sliding type with respect to said internal body (3), at least one movement actuator (7) operatively and articulatedly cooperating with said external body (5), and at least one crank-type kinematism (9) having a first end (9a) thereof articulatedly connected to said external body (5) and a second end (9b) thereof articulatedly connected to said external structure (11).

2. Lifting mechanism (1) according to claim 1, **characterised in that** said first end (5a) is articulatedly connected to said load to be handled and/or lifted.

3. Lifting mechanism (1) according to claim 1, **characterised in that** relatively sliding surfaces of said external body (5) along said internal body (3) are equipped with means adapted to reduce wear resistances.

4. Lifting mechanism (1) according to claim 1, **characterised in that** said articulated connections are hinges.

5. Lifting mechanism (1) according to claim 1, **characterised in that** said movement actuator (7) is a mechanism or kinematism adapted to provide a linear movement.

6. Lifting mechanism (1) according to claim 5, **characterised in that** said movement actuator (7) is a pneumatic or hydraulic cylinder, or a screw/lead screw system actuated by hydraulic, electric or pneumatic motors.

7. Lifting mechanism (1) according to claim 1, **characterised in that** said movement actuator (7) has a first end (7a) thereof articulatedly connected to said external structure (11) and a second end (7b) thereof articulatedly connected directly to said external body (5).

8. Lifting mechanism (1) according to claim 7, **characterised in that** said movement actuator (7) is contained in at least one hollow space (17) obtained between said internal body (3) and said external body (5).

9. Lifting mechanism (1) according to claim 1, **characterised in that** said movement actuator (7) operatively and articulatedly cooperates with said external body (5) by interposing a connection lobe (17) integral with said internal body (3), said movement actuator (7) having a first end (7a) thereof articulatedly connected to said external structure (11) and a second end (7b) thereof articulatedly connected to said connection lobe (17).

10. Lifting mechanism (1) according to claim 1, **characterised in that** said movement actuator (7) operatively and articulatedly cooperates with said external body (5) by interposing said crank-type kinematism (9), said movement actuator (7) having a first end (7a) thereof articulatedly connected to said internal body (3) and a second end (7b) thereof articulatedly connected to a connecting rod lobe (9c) of said crank-type kinematism (9).

11. Lifting mechanism (1) according to claim 1, **characterised in that** said movement actuator (7) operatively and articulatedly cooperates directly with said external body (5), said movement actuator (7) having a first end (7a) thereof articulatedly connected to said internal body (3) and a second end (7b) thereof articulatedly connected to said external body (5).

12. Transport vehicle (20) equipped with at least one lower load plane (21a) and one upper load plane (21b) equipped with at least one lifting mechanism (1) according to Claim 1, said lifting mechanism (1) being interposed between said lower load plane (21a) and said upper load plane (21b), said external structure (11) being substantially arranged at a height of said lower load plane (21a) and said first end (5a) of said external body (5) being articulatedly connected to said upper load plane (21b).

13. Transport vehicle (20) according to claim 12, **characterised in that** it is equipped with said lifting mechanisms (1) arranged along a left side thereof and along a right side thereof, said mechanisms (1), at least two corresponding mechanisms on different sides, being mutually connected by at least one connection structure.

## Patentansprüche

1. Hebevorrichtung (1) mit wenigstens einem Innenkörper (3), von dem das eine Ende (3a) mit einem Gelenk versehen ist, das um wenigstens eine Außenstruktur (11) rotiert, und mit wenigstens einem Außenkörper (5), von dem ein Ende (5a) mit einer zu verlagernden und/oder anzuhebenden Last verbunden ist. Dieser Außenkörper (5) ist an dem besagten Innenkörper (3) mit einer Schiebeverbindung gegenüber dem besagten Innenkörper (3) versehen, und wenigstens einem Bewegungstrieb (7), der operativ über das Gelenk mit dem besagten Außenkörper (5) arbeitet, und wenigstens einem Kurbelgetriebe (9), dessen eines Ende (9a) mit einem Gelenk am besagten Außenkörper (5) befestigt ist, das zweite Endstück (9b) ist dagegen mit einem Gelenk an der besagten Außenstruktur (11) befestigt.

2. Hebevorrichtung (1) gemäß Patentanspruch 1, **gekennzeichnet durch** die Tatsache, dass das erste Endstück (5a) **durch** ein Gelenk an der zu verlagernden und/oder hebenden Last befestigt ist.

3. Hebevorrichtung (1) gemäß Patentanspruch 1, **gekennzeichnet durch** die Tatsache, dass die Gleitflächen des besagten Außenkörpers (5) längs dem Innenkörper (3) mit Mitteln versehen sind, welche den Reibwiderstand verkleinern.

4. Hebevorrichtung (1) gemäß Patentanspruch 1, **gekennzeichnet durch** die Tatsache, dass es sich bei den besagten Gelenkverbindungen um Scharniere handelt.

5. Hebevorrichtung (1) gemäß Patentanspruch 1, **gekennzeichnet durch** die Tatsache, dass der besagte Bewegungstrieb (7) ein Mechanismus oder Getriebe für die Abgabe von linearer Bewegung ist.

6. Hebevorrichtung (1) gemäß Patentanspruch 5, **gekennzeichnet durch** die Tatsache, dass der besagte Bewegungstrieb (7) ein pneumatischer oder hydraulischer Zylinder ist bzw. ein Schrauben/Mutterschraubensystem, das durch hydraulische, elektrische oder pneumatische Motore angetrieben wird.

7. Hebevorrichtung (1) gemäß Patentanspruch 1, **gekennzeichnet durch** die Tatsache, dass der besagte Bewegungstrieb (7) an einem Ende (7a) mit einem Gelenk an der besagten Außenstruktur (11) befestigt ist und am anderen Ende (7b) mit einem Gelenk direkt am Außenkörper (5).

8. Hebevorrichtung (1) gemäß Patentanspruch 7, **gekennzeichnet durch** die Tatsache, dass der besagte Bewegungstrieb (7) sich in wenigstens einem Zwischenraum (17) befindet, der zwischen dem besagten Innenkörper (3) und dem besagten Außenkörper (5) vorgesehen ist.

9. Hebevorrichtung (1) gemäß Patentanspruch 1, **gekennzeichnet durch** die Tatsache, dass der besagte Bewegungstrieb (7) operativ **durch** ein Gelenk mit dem besagten Außenkörper (5) arbeitet, und zwar mit einem Verbindungsstück (17), das am besagten Innenkörper (3) befestigt ist. Der besagte Bewegungstrieb (7) ist an einem Ende (7a) mit einem Gelenk an der besagten Außenstruktur (11) befestigt und am anderen Ende (7b) mit einem Gelenk an dem betreffenden Verbindungsstück (17).

10. Hebevorrichtung (1) gemäß Patentanspruch 1, **gekennzeichnet durch** die Tatsache, dass der besagte Bewegungstrieb (7) operativ mit einem Gelenk am besagten Außenkörper (5) befestigt ist, und zwar mit dem besagten Kurbelgetriebe (9) dazwischen. Der Bewegungstrieb (7) ist an einem Ende (7a) mit einem Gelenk am besagten Innenkörper (3) befestigt, und am anderen Ende (7b) mit einem Gelenk an einem Pleuelverbindungsstück (9c) des besagten Kurbelgetriebes (9).

11. Hebevorrichtung (1) gemäß Patentanspruch 1, **gekennzeichnet durch** die Tatsache, dass der besagte Bewegungstrieb (7) operativ mit einem Gelenk direkt mit dem besagten Außenkörper (5) arbeitet. Der besagte Bewegungstrieb (7) ist an einem Ende (7a) mit einem Gelenk an dem besagten Innenkörper (3) befestigt, und am anderen (7b) mit einem Gelenk am besagten Außenkörper (5).

12. Transportfahrzeug (20) mit wenigstens einer unteren (21 a) und einer oberen (21b) Ladefläche, ausgerüstet mit wenigstens einer Hebevorrichtung (1) gemäß Patentanspruch 1, wobei sich die besagte Hebevorrichtung (1) zwischen der besagten unteren (21a) und der besagten oberen (21b) Ladefläche befindet, wobei sich die Außenstruktur (11) substantiell auf der Höhe der unteren Ladefläche (21a) befindet und das besagte erste Endstück (5a) des besagten Außenkörpers (5) mit einem Gelenk an der besagten oberen Ladefläche (21b) befestigt ist.

13. Transportfahrzeug (20) gemäß Patentanspruch 12, **gekennzeichnet durch** die Tatsache, dass die besagten Hebemechanismen (1) jeweils längs seiner linken und rechten Seite aufgebracht sind. Diese Mechanismen (1), wenigstens zwei Stück, d.h. jeweils eine auf einer Seite, sind miteinander **durch** wenigstens eine Verbindungsstruktur verbunden.

## Revendications

1. Mécanisme de soulèvement (1) comprenant au moins un corps interne (3) ayant à sa première extrémité (3a) raccordée en mode articulé et rotative autour d'au moins une structure externe (11) et au moins un corps extérieur (5) ayant à sa première extrémité (5a) raccordée à un chargement à manutentionner et/ou soulever, ledit corps extérieur (5) étant fixé audit corps interne (3) au moyen d'un accouplement de type coulissant par rapport audit corps interne (3), au moins d'un actionneur de mouvement (7) coopérant en mode opératif et en mode articulé avec ledit corps extérieur (5), et au moins un cinématisme à manivelle (9) ayant à sa première extrémité (9a) raccordée en mode articulé audit corps extérieur (5) et une seconde extrémité (9b) raccordée en mode articulé à ladite structure externe (11).

2. Mécanisme de soulèvement (1) selon la revendication 1, **caractérisé par le fait que** ladite première extrémité (5a) est raccordée audit chargement à manutentionner et/ou soulever en mode articulé.

3. Mécanisme de soulèvement (1) selon la revendication 1, **caractérisé par le fait que** des surfaces de coulissement relatif dudit corps extérieur (5) le long du corps interne (3) sont dotées de moyens aptes à réduire des résistances de friction.

4. Mécanisme de soulèvement (1) selon la revendication 1, **caractérisé par le fait que** lesdites connexions articulées sont des charnières.

5. Mécanisme de soulèvement (1) selon la revendication 1, **caractérisé par le fait que** ledit actionneur de mouvement (7) est un mécanisme ou cinématisme apte à fournir un mouvement linéaire.

6. Mécanisme de soulèvement (1) selon la revendication 5, **caractérisé par le fait que** ledit actionneur de mouvement (7) est un cylindre pneumatique ou hydraulique, ou un système à vis/écrou actionné da moteurs hydrauliques, électriques ou pneumatiques.

7. Mécanisme de soulèvement (1) selon la revendication 1, **caractérisé par le fait que** ledit actionneur de mouvement (7) a sa première extrémité (7a) raccordée en mode articulé à ladite structure externe (11) et une seconde extrémité (7b) raccordée en mode articulé directement audit corps extérieur (5).

8. Mécanisme de soulèvement (1) selon la revendication 7, **caractérisé par le fait que** ledit actionneur de mouvement (7) est continu dans au moins un espace (17) obtenu entre ledit corps interne (3) et ledit corps extérieur (5).

9. Mécanisme de soulèvement (1) selon la revendication 1, **caractérisé par le fait que** ledit actionneur de mouvement (7) coopère en mode opératif et en mode articulé avec ledit corps extérieur (5) en interposant un lobe de connexion (17) solidaire audit corps interne (3), ledit actionneur de mouvement (7) ayant une première extrémité (7a) raccordée en mode articulé à ladite structure externe (11) et une seconde extrémité (7b) raccordée en mode articulé audit lobe de connexion (17).

10. Mécanisme de soulèvement (1) selon la revendication 1, **caractérisé par le fait que** ledit actionneur de mouvement (7) coopère en mode opératif et en mode articulé avec ledit corps externe (5) au moyen l'interposition dudit cinématisme à manivelle (9), ledit actionneur de mouvement (7) ayant une première extrémité (7a) raccordée en mode articulé audit corps interne(3) et une seconde extrémité (7b) raccordée en mode articulé à un lobe de bielle (9c) dudit cinématisme à manivelle (9).

11. Mécanisme de soulèvement (1) selon la revendication 1, **caractérisé par le fait que** ledit actionneur de mouvement (7) coopère en mode opératif et en mode articulé directement avec ledit corps externe (5), ledit actionneur de mouvement (7) ayant une première extrémité (7a) raccordée en mode articulé audit corps interne (3) et sa seconde extrémité (7b) raccordée en mode articulé audit corps externe (5).

12. Véhicule de transport (20) doté d'au moins un plan de chargement inférieur (21a) et un plan de chargement supérieur (21b) doté d'au moins un mécanisme de soulèvement (1) selon la revendication 1, ledit mécanisme de soulèvement (1) étant interposé entre ledit plan de chargement inférieur (21a) et ledit plan de chargement supérieur (21b), étant ladite structure externe (11) disposée substantiellement à une hauteur de ledit plan de chargement inférieur (21a) et ladite première extrémité (5a) dudit corps externe (5) étant raccordée en mode articulé audit plan de chargement supérieur (21b).

13. Véhicule de transport (20) selon la revendication 12, **caractérisé par** le fait d'être doté desdits mécanismes de soulèvement (1) disposés le long de son côté gauche et le long de son côté droit, lesdits mécanismes (1), au moins deux correspondantes sur des côtés différents, étant raccordés entre eux d'au moins une structure de raccordement.
